# EUROPEAN PATENT APPLICATION

(11) **EP 1 845 714 A2**
(43) Date of publication of application: **17.10.2007**
(21) Application number: 07000938.6
(22) Date of filing: 17.01.2007
(51) Int. Cl.: H04N 5/44

(54) **Method, system and storage medium for program changing**

(30) Priority: 11.04.2006 CN 200610075392
(71) Applicant: BenQ Corporation, Gueishan Taoyuan 333 (TW)
(72) Inventor: Chang, Chih-Cheng, Anle District Keelung City 204 (TW)
(74) Representative: Hrovat, Andrea Darinka

(57) **Abstract**

A method, system and storage medium for program changing. The method comprises the following steps: obtains a current program number, receives an instruction to determine a program change direction, searches a first lookup table to find a target program number according to the direction, searches a second lookup table to get program information of the target program according to the target program number, and changes from the current program to the target program according to the program information.

## Description

### BACKGROUND OF THE INVENTION

### Field of the Invention

The invention relates to techniques for programs changing, and, more particularly, to changing programs in a television reception system.

A television typically comprises an apparatus for changing programs. A user may command an upward or downward instruction to change programs. A tuner in a changing program system tunes to a desired frequency in response to the instruction. Conventionally, when changing programs, a processor in the television checks a database to determine the desired frequency, and drives the tuner to tune to the desired frequency. In regions with complicated television broadcasting systems, however, such as Europe, a large database is required.
Searching a large database is inconvenient and slow.

### BRIEF SUMMARY OF THE INVENTION

Accordingly, the invention provides a method, system and storage medium for programs changing efficiently to speed program changing.

In one aspect of the invention, the method first obtains a current program number of a current program. An instruction is received for determining the program changing direction. A target program number of a target program is retrieved from a first lookup table according to the instruction, wherein the first lookup table stores program numbers corresponding to each program. Target program information is retrieved from a second lookup table when the target program number is not the same as the current program number, wherein the second lookup table stores program information corresponding to each program. The current program is switched to the target program according to the target program information.

In another aspect of the invention, a storage medium for program changing is provided. The storage medium comprises a first lookup table and a second lookup table. The first lookup table has at least one row comprising a program number and a flag corresponding to the program number. The flag is set true if the program number has been assigned to a program. The second lookup table has at least one row comprising a program number and a frequency correspondding to the program number. The program numbers in the first lookup table are associated with the program numbers in the second lookup table.

In yet another embodiment of the invention, a system for program changing within a frequency range is also provided. The system comprises a user interface, a memory device, a processor and a tuner. The user interface receives an instruction which indicates a program is changed upward or downward. The memory device stores at least a first lookup table and a second lookup table. The first lookup table notes if a program number has been assigned to a program, while the second lookup table stores the program number and program information corresponding to each program number. The processor obtains a current program number of a current number, retrieves a target program number from the first lookup table according to the current program number and the instruction, and retrieves the target program information from the second lookup table according to the target program number. The tuner changes the program from the current program to the target program according to the target program information.

### BRIEF DESCRIPTION OF THE DRAWINGS

The invention will become more fully understood from the detailed description, given herein below, and the accompanying drawings. The drawings and description are provided for purposes of illustration only, and, thus, are not intended to be limiting of the invention.
- Fig. 1: shows a block diagram of a system for program changing according to an embodiment of the invention;
- Fig. 2a: shows an exemplary structure of the first and second lookup tables;
- Fig. 2b: shows an exemplary initialized valid program table;
- Fig. 2c: shows an exemplary initialized program number table;
- Fig. 2d: shows an exemplary initialized program configuration table;
- Fig. 3: shows another exemplary structure of the first and second lookup tables; and
- Fig. 4: shows a flowchart of a method for program changing according to an embodiment of the invention.

### DETAILED DESCRIPTION OF THE INVENTION

The term "program" herein refers to a physical medium of communication or access, which in other district outside of Europe, such as the U.S.A, "program" is usually called "channel". Hence, a method, system or medium storage for program changing has equivalent interpretation as a method, system, or medium storage for channel changing.

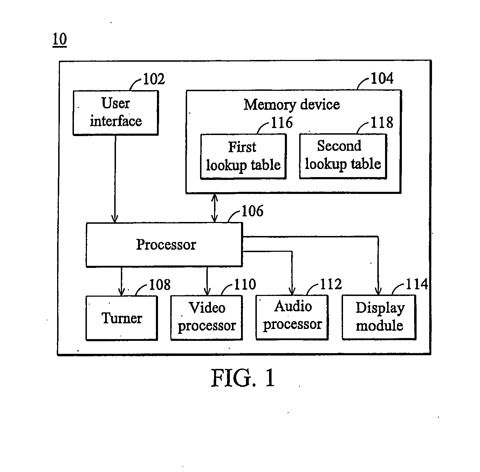

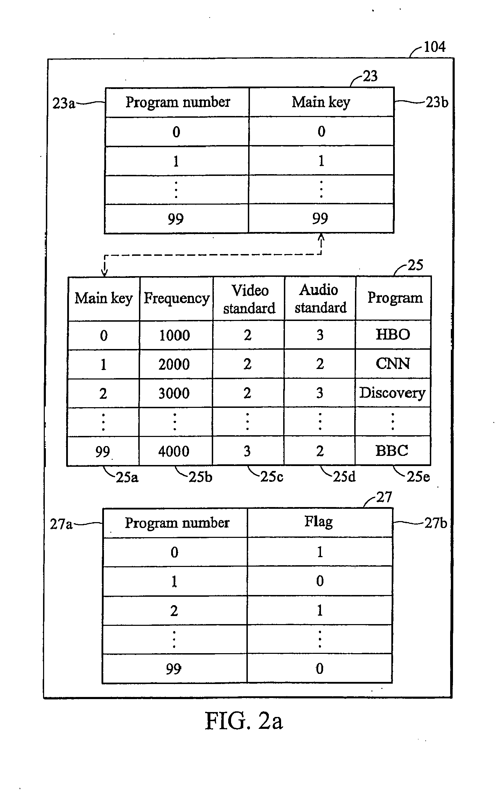

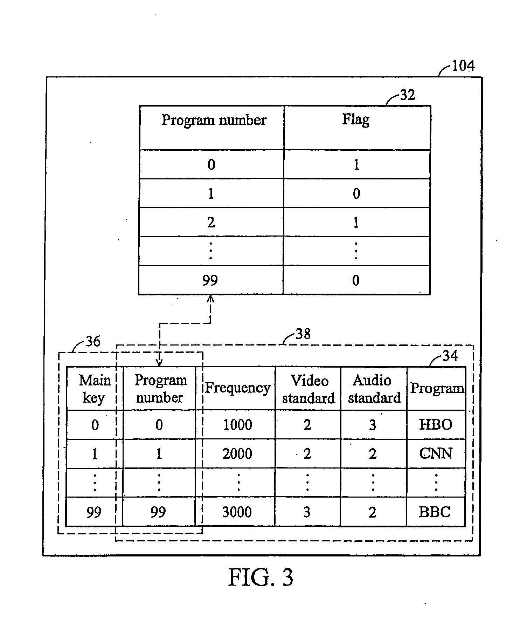

Fig. 1 shows a block diagram of a system for program changing according to an embodiment of the invention. The system for program changing 10 comprises a user interface 102, a memory device 104, a processor 106, a tuner 108, a video processor 110, an audio processor 112 and a display module 114. The user interface 102 receives instructions for determining the direction of the program changing. For example, when watching program 4, a user may issue an upward program changing instruction to switch to program 5, or issue a downward program changing instruction to switch to program 3. The program remains unchanged when the current program is the top or lowest program. The memory device 104 has a first lookup table 116 and a second lookup table 118, both storing information about programs. The first lookup table 116 has at least one row comprising a program number and a flag corresponding to the program number. The flag is set to true if the program number has been assigned to a program. The second lookup table 118 has at least one row comprising the program number and program information corresponding to the program number, which includes program frequencies, video standard, and audio standard. The program numbers in the first lookup table 116 are associated with the program numbers in the second lookup table 118. The contents and structure of the first lookup table 116 and the second lookup table 118 will be introduced in Fig. 2a and Fig. 3. The processor 106 obtains a current program number, and finds the next program based on the first lookup table 116 and the current program number. The tuner 108 tunes to a desired frequency according to the program information retrieved from the second lookup table 118. The video processor 110 and audio processor 112 are respectively set according to the video standard and the audio standard of program information for each program. The display module 114 displays the program contents.

Fig. 3 shows an exemplary structure of the first and second lookup tables. The first lookup table 32 comprises at least one row having a program number and a flag corresponding to the program number, wherein the flag is set to true or logic high if the program number has been assigned to a program. The flag indicates whether or not a program number has been assigned to a program. For example, an entry of program number column in "1" with a flag corresponding to the program number "true" means program 1 has recorded in the valid program table 32. To the contrary, an entry of a program number in "1" with a flag corresponding to the program number "false" means that program 1 does not exist temporarily. According to the first lookup table 32 shown in Fig. 3, a user who is watching program 0 and commands an upward program changing will eventually watch program 2 instead of program 1. Because the flag of program 1 is false, program 1 is not recognized, thus, the processor 106 in Fig. 1 skips program 1 and retrieves the program number "2": Each row of the first lookup table has only two entries, and thus, it takes less time to search the first lookup table 32.

In some preferred embodiments of the invention, the first table 32 stores several rows when initialized. The flag of each corresponding program number is set to 0.

The second lookup table 34 comprises a plurality of rows, wherein each row includes a main key as well as a corresponding program number, frequency, video standard, audio standard, and program name. The program numbers in the first and second lookup tables are associated with each other. The corresponding frequency stores an arbitrary value from 0 to 65,535 representing a certain frequency when two bytes are allocated to store the frequency. The video standard entry stores an arbitrary value from 0 to 3 representing the video standard corresponding to the main key. The audio standard entry stores an arbitrary value from 0 to 15 representing the audio standard corresponding to the main key. For example, a video standard entry storing "1", "2" or "3" may represent NTSC (National TV Standards Committee), PAL (Phase Alternating Line), and SECAM (SEquential Couleur Avec Memoire), respectively. An audio standard entry storing "1", "2", or "3" may represent BG, DK, and I audio standards, respectively. The main key entry can be used as a foreign key for associating the second lookup table 34 with other lookup tables. In some preferred embodiments of the invention, the second lookup table 34 is initialized with certain rows, such as 100 rows, having main keys set from 0 to 99, frequencies, video standards and audio standards set "0", and program names set "\0\0\0\0\0", Null, or N/A.

Fig. 2a shows another exemplary structure of the first and second lookup tables. The first lookup table 32 is shown as the valid program table 27. The second lookup table 34 is split into two sub-tables, the program configuration table 25 and the program number table 23 so as to save searching time under certain circumstances.

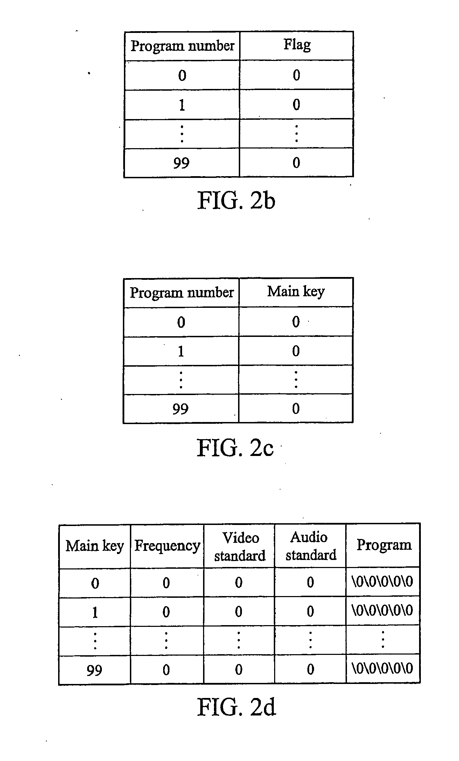

Fig. 2b shows an exemplary initialized valid program table. The initialized valid program table comprises 100 rows, the entries in the program number column ranks from 0 to 99, and flags corresponding to the program numbers are set to false. The program number table 23 in Fig. 2a comprises a plurality of rows, wherein each row has a program number 23a and a corresponding main key 23b. The main key entry 23b can be used as a foreign key for associating the program number table 23 with other lookup tables. In some embodiments of the invention, the program number table 23 can be initialized with several rows, with every program number 23a set to the row order in the program number table 23 and every corresponding main key 23b set to "0". Fig. 2c shows an exemplary initialized program number table 23. The program numbers are initialized from 0 to 99, and the corresponding main keys are set "0".

The program configuration table 25 in Fig. 2a comprises a plurality of rows having a main key 25a and corresponding frequency 25b, a video standard 25c, an audio standard 25d, and program name 25e. The frequency column 25b can store an arbitrary value from 0 to 65,535 to represent a certain frequency when two bytes are allocated for the frequency column 25b. The video standard column 25c can store an arbitrary value from 0 to 3 representing the video standard corresponding to the main key. The audio standard column 25d stores an arbitrary value from 0 to 15 representing the audio standard corresponding to the main key. For example, an entry of video standard storing "1", "2" or "3" may represent NTSC (National TV Standards Committee), PAL (Phase Alternating Line), and SECAM (SEquential Couleur Avec Memoire), respectively. An audio standard entry storing "1", "2", or "3" may represent BG, DK, and I audio standards, respectively. The main keys 25a of program configuration table 25 are associated with the main keys 23b of program number table 23. For example, a program number "1" and the corresponding main key "1" in program number table 23 indicates program 1 are associated with a main key 1. Thus, the frequency corresponding to main key 1 in program configuration table 25 notes the frequency of program 1. In some embodiments of the invention, the program configuration table 25 is initialized with certain rows, and the main key column 25a is set to the row order in the program configuration table 25, the frequency column 25b, video standard column 25c and audio standard column 25d are set to "0". All entries in the program name column 25e are set to "\0\0\0\0\0", Null, or N/A. Fig. 2d shows an exemplary initialized program configuration table. The initialized program configuration table comprises 100 rows, the main key column is ranked from 0 to 99, the frequency column, video standard and the audio standard are set 0, and the program name column is set to \0\0\0\0\0.

The initialized program number table 23, program configuration table 25 and valid program table 27 can be updated by users when the users are watching televisions. For example, a user tunes the tuner 108 and finds there is a program at frequency 1000. The user may decide to add the program into the program number table 23, program configuration table 25 and valid program table 27. That is, the user may update the program in the program number table 23, program configuration table 25 and valid program table 27 according to a newly found program. Table-updating methods are in themselves well known, and hence, they are not discussed in the specification.

Fig. 2d shows an exemplary initialized program configuration table. The initialized program configuration table comprises 100 rows, the main key column is ranking from 0 to 99, the frequency column, video standard and the audio standard are set to 0, and the program name column is set to \0\0\0\0\0.

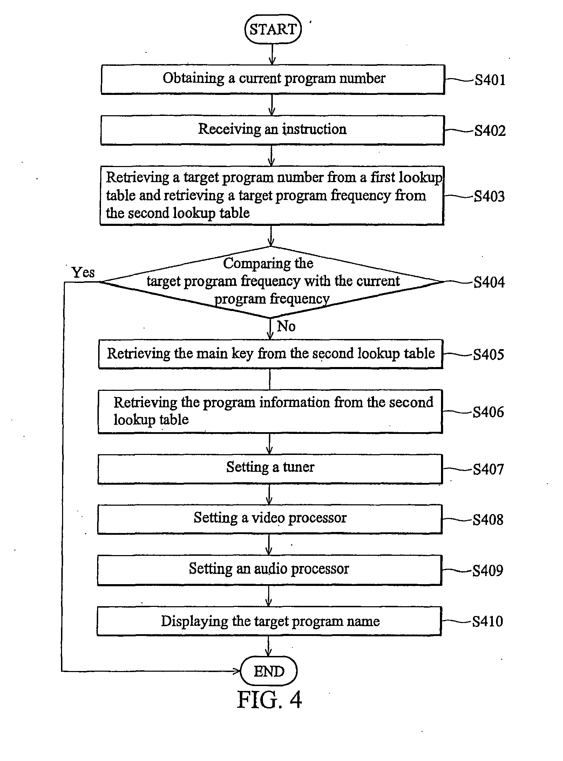

Fig. 4 shows a flowchart of a method for program changing according to an embodiment of the invention. First, the program number is obtained in step S401. An instruction is received in step S402 to determine the direction of the program changing. For example, the instruction is an upward program changing instruction or a downward program changing instruction. In step S403, a next program number is retrieved from the first lookup table 32 (i.e. valid program table 27). A target program frequency is also retrieved and is tuned by a tuner. For example, referring to Fig. 2a and Fig. 3, suppose that the current program is program 0, when receiving an upward program change instruction, a valid upward program, according to the first lookup table 32, is program 2. In step S404, the target program frequency is compared with the current program frequency. If the current program frequency is the same as the target program frequency, mainly because the current program is the only program in the frequency range, the method ends. Otherwise, the main key of the target program is retrieved in step S405. The program name, frequency, video standard and audio standard can also be accessed from the second lookup table 38 (i.e. the program configuration table 25 and the program number table 23) in step S406. A video processor and audio processor can be set according to the video standard and audio standard in steps S407-S409. The program name is shown by a display module in step S410.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for program changing within a frequency range, wherein at least one program exists in the frequency range, and each program corresponds to one program number and program information, the method comprising:
(a) obtaining a current program number of a current program;
(b) receiving an instruction to determine a program changing direction;
(c) retrieving a target program number of a target program from a first lookup table according to the instruction, wherein the first lookup table stores the program number corresponding to each program;
(d) retrieving the program information of the target program from a second lookup table when the target program number is not as same as the current program number, wherein the second lookup table comprises the program information corresponding to each program; and
(e) changing from the current program to the target program according to the program information of the target program.

2. The method for program changing as claimed in claim 1, wherein the program changing direction in step (b) is one of an upward direction and a downward direction.

3. The method for changing program as claimed in claim 1, further comprising completing the method when the target program is the same as the current program in step (d).

4. The method for changing program as claimed in claim 1, wherein the program information comprises a frequency corresponding to the program, and changing to the target program in step (e) is according to the frequency corresponding to the target program.

5. The method for program changing as claimed in claim 1, wherein the program information comprises a video standard, and changing to the target program in step (e) further comprises accessing a video signal of the target program according to the video standard corresponding to the target program.

6. The method for program changing as claimed in claim 5, wherein the program information comprises an audio standard, and changing the target program in step (e) further comprises accessing an audio signal of the target program according to the audio standard corresponding to the target program.

7. The method for program changing as claimed in claim 6, further comprising:
(f) displaying the target program according to the audio signal and the video signal.

8. The method for program changing as claimed in claim 7, further comprising:
(f) displaying the program information corresponding to the target program.

9. A storage medium storing a plurality of lookup tables for program changing, comprising:
a first lookup table having at least one row comprising a program number and a flag corresponding to the program number, wherein the flag is set to true if the program number has been assigned to a program; and
a second lookup table having at least one row comprising the program number and a frequency corresponding to the program number, wherein the program number in the first lookup table is associated with the program number in the second lookup table.

10. The storage medium as claimed in claim 9, wherein the second lookup table comprises a first sub-table and a second sub-table, the first sub-table comprises at least one row having the program number and a main key corresponding to the program number, the second sub-table comprises at least one row having the main key and the frequency corresponding to the main key, and the main key in the first sub-table and the main key in the second sub-table are associated with each other.

11. The storage medium as claimed in claim 9, wherein the row in the second lookup table further comprises a video standard entry and an audio standard entry for storing a video standard and a audio standard, respectively, corresponding to the program number.

12. A system for program changing within a frequency range, wherein at least one program exists in the frequency range, and the program corresponds to a program number and program information, the system comprising:
a user interface receiving an instruction, wherein the instruction is an upward program change or a downward program change;
a memory device at least storing:
a first lookup table indicating whether the program number has been assigned to the program; and
a second lookup table storing the program information of the program;
a processor obtaining the program number of a current program, retrieving the program number of a target program from the first lookup table according to the program number of the current program and the instruction, and retrieving the program information of the target program from the second lookup table according to the program number of the target program; and
a tuner changing the program from the current program to the target program.

13. The system for program changing as claimed in claim 12, wherein the first lookup table comprises at least one row comprising the program number and a flag corresponding to the program number, and the second lookup table comprises at least one row comprising the program number and a frequency corresponding to the program number, wherein the program number in the first lookup table is associated with the program number in the second lookup table.

14. The system for program changing as claimed in claim 13, wherein the second lookup table comprises a first sub-table and a second sub-table, the first sub-table comprises at least one row having the program number and a main key corresponding to the program number, the second sub-table comprises at least one row having the main key and a frequency corresponding to the main key, and the main key in the first sub-table and the main key in the second sub-table are associated with each other.

15. The system for program changing as claimed in claim 12, wherein the program information comprises a frequency, and the tuner tunes to the target program from the current program according to the frequency corresponding to the target program.

16. The system for program changing as claimed in claim 12 further comprising a video processor, wherein the program information comprises a video standard, the processor sets the video processor according the video standard corresponding to the target program, and the video processor accesses a video signal of the target program.

17. The system for program changing as claimed in claim 16 further comprising an audio processor, wherein the program information comprises an audio processor, the processor sets the audio processor according to the audio standard corresponding to the target program, and the audio processor accesses an audio signal of the target program.

18. The system for program changing as claimed in claim 17 further comprising a display module for displaying the target program according to the video and the audio signals corresponding to the target program.

19. The system for program changing as claimed in claim 18, wherein the processor transmits the program information corresponding to the target program to the display module, and the display module displays the program information corresponding to the target program.
